(19) **Europäisches Patentamt European Patent Office Office européen des brevets**

(11) **EP 4 668 100 A1**

(12) **EUROPEAN PATENT APPLICATION**

(43) Date of publication:
24.12.2025 Bulletin 2025/52

(21) Application number: 25183823.1

(22) Date of filing: 18.06.2025

(51) International Patent Classification (IPC):
**G06F 7/544** (2006.01)  **G06F 17/16** (2006.01)

(52) Cooperative Patent Classification (CPC):
**G06F 7/5443; G06F 17/16; G06N 3/045; G06N 3/0464; G06N 3/0495; G06N 3/063; G06N 3/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 20.06.2024 US 202463662006 P

(71) Applicant: CEVA Technologies, Ltd
4673302 Herzlia Pituach (IL)

(72) Inventor: BARAK, Itzhak
6092000 12 Hapa amon, Kadima (IL)

(74) Representative: Pearl Cohen Zedek Latzer Baratz
UK LLP
The Gridiron Building
One Pancras Square
London N1C 4AG (GB)

(54) **ACCELERATOR FOR ARRAY MULTIPLICATION**

(57) A method and apparatus for multiplying a first array including a plurality of equal-sized subgroups of elements, each including at least a minimum number of zero-elements, by a second array, by, for each subgroup of elements of the first array: loading a subgroup mask indicating locations of non-zero elements within the subgroup of elements of the first array, from memory into a first register; loading, from memory into a second register, the non-zero elements in the subgroup of elements of the first array; loading, from memory into a third register, a subgroup of elements of the second array corresponding to the subgroup of elements of the first array; and multiplying each of the non-zero elements of the first array by the corresponding elements of the second array, wherein the corresponding elements of the second array are selected according to the subgroup mask.

Fig. 2

**Description**

**FIELD OF THE INVENTION**

Embodiments of the present invention relate to a hardware accelerator for array multiplication, and more specifically, for leveraging structured sparsity for acceleration of array multiplication.

**BACKGROUND OF THE INVENTION**

Sparsity refers to the condition where a significant number of elements in a dataset, a model or an array are zero. In the context of machine learning, sparsity can be found in weight matrices, where for example in neural networks, sparsity can be encouraged through regularization techniques that may penalize the absolute size of the weights, leading to many weights becoming zero or using various pruning techniques. Sparsity is a common aspect of machine learning models, such a neural networks (NNs), that enhances efficiency, interpretability, and robustness while aiding in the prevention of overfitting and the selection of relevant features.

The popularity of sparse representations, combined with the high complexity of AI model calculations give rise a need to leverage sparse representations for more efficient storage and computations.

**SUMMARY OF THE INVENTION**

According to some embodiments of the invention, a system and method for multiplying a first array by a second array, wherein the first array comprises a plurality of equal-sized subgroups of elements of the first array, each including at least a minimum number of elements with zero value, may include, for each subgroup of elements of the first array: loading a subgroup mask from memory into a first processor register, the subgroup mask indicating locations of non-zero elements within the subgroup of elements of the first array; loading, from memory into a second processor register, the non-zero elements in the subgroup of elements of the first array; loading, from memory into a third processor register, a subgroup of elements of the second array corresponding to the subgroup of elements of the first array; and multiplying each of the non-zero elements of the first array by the corresponding elements of the second array, wherein the corresponding elements of the second array are selected from the subgroup of elements of the second array according to the subgroup mask.

According to embodiments of the invention, the subgroup mask may include a single bit for each non-zero element in the subgroup of elements of the first array.

Embodiments of the invention may include receiving the first array; generating a mask, by traversing the elements of the first array and marking the locations of the non-zero elements in the mask; discarding zero elements from the first array; and storing in memory the mask and the non-zero elements.

Embodiments of the invention may include storing in memory a mask indicating locations of non-zero elements within the first array, and the non-zero elements of the first array without the zero elements.

According to embodiments of the invention, loading the non-zero elements in the subgroup of elements may include advancing a pointer by the number of the non-zero elements that are loaded.

According to embodiments of the invention, the subgroup mask may include a single bit for each element in the subgroup of elements of the first array, wherein set bits in the subgroup mask indicate locations of the non-zero elements, and wherein loading the non-zero elements in the subgroup of elements of the first array comprises advancing a pointer based the number of set bits in the subgroup mask.

According to embodiments of the invention, the first array may include weights of a neural network, wherein the second array may include data elements, and wherein multiplying the first array by the second array may produce a result of inferring the neural network on the data array.

According to embodiments of the invention, the neural network may be trained to have a minimum level of sparsity.

According to embodiments of the invention, wherein multiplying a non-zero element of the first array by the corresponding element of the second array may be performed by a multiply-accumulate circuit.

Embodiments of the invention may include setting the size of the equal-sized subgroups so that the maximal number of non-zero elements in the first array equals the number of multiply-accumulate circuits.

According to some embodiments of the invention, a system and method for multiplying a weight array by a data array, wherein the weight array may include a plurality of equal-sized subgroups of weight elements, each including at least a minimum number of weight elements with zero value, may include, for each subgroup of weight elements: loading, from memory into a first processor register, a subgroup weight mask, the subgroup weight mask indicating locations of non-zero weight elements within the subgroup of weight elements; loading, from memory into a second processor register, the non-zero weight elements in the subgroup of weight elements; loading, from memory into a third processor register, a subgroup of data elements corresponding to the subgroup of weight elements; and multiplying each of the non-zero weights by the corresponding data element from the subgroup of data elements, wherein the corresponding data elements are selected for multiplication from the subgroup of data elements according to the locations of non-zero weight elements in the loaded subgroup weight mask.

According to some embodiments of the invention, a processor for multiplying a first array by a second array, wherein the first array may include a plurality of equal-sized subgroups of elements of the first array, each including at least a minimum number of elements with zero value, may include: a circuit for loading from memory non-zero elements in a subgroup of elements of the first array; a circuit for loading from memory a subgroup of elements of the second array corresponding to the subgroup of elements of the first array; a circuit for selecting elements of the second array that correspond to the non-zero elements of the first array, wherein the circuit to select the corresponding elements of the second array from the subgroup of elements of the second array according to a subgroup mask indicating locations of non-zero elements within the subgroup of elements of the first array; and a plurality of multiply-accumulate circuits configured to multiply each of the non-zero elements of the first array by the corresponding elements of the second array, wherein the number of multiply-accumulate circuits equals a maximal number of elements of the first array with non-zero value.

## BRIEF DESCRIPTION OF THE DRAWINGS

The subject matter regarded as the invention is particularly pointed out and distinctly claimed in the concluding portion of the specification. Embodiments of the invention, however, both as to organization and method of operation, together with objects, features and advantages thereof, may best be understood by reference to the following detailed description when read with the accompanied drawings. Embodiments of the invention are illustrated by way of example and not limitation in the figures of the accompanying drawings, in which like reference numerals indicate corresponding, analogous or similar elements, and in which:

Fig. 1 is schematic illustration of an exemplary device according to embodiments of the invention.

Fig. 2 demonstrates the performance of a single dot operation, according to embodiments of the present invention.

Fig. 3 is a high-level flowchart illustrating a method for multiplying a sparse array by a second array, according to embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

## DETAILED DESCRIPTION OF THE INVENTION

In the following description, various aspects of the present invention will be described. For purposes of explanation, specific configurations and details are set forth in order to provide a thorough understanding of the present invention. However, it will also be apparent to one skilled in the art that the present invention may be practiced without the specific details presented herein. Furthermore, well known features may be omitted or simplified in order not to obscure the present invention.

Although some embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device that manipulates and/or transforms data represented as physical (e.g., electronic) quantities within the computer's registers and/or memories into other data similarly represented as physical quantities within the computer's registers and/or memories or other information transitory or non-transitory or processor-readable storage medium that may store instructions, which when executed by the processor, cause the processor to execute operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term "set" when used herein may include one or more items unless otherwise stated. Unless explicitly stated, the method embodiments described herein are not constrained to a particular order or sequence. Additionally, some of the described method embodiments or elements thereof can occur or be performed in a different order from that described, simultaneously, at the same point in time, or concurrently.

Array multiplication, also known as matrix multiplication, involves multiplying two arrays (matrices) together. The result is a new array where each element is the dot product of a row from the first array and a column from the second array.

As used herein, the dot product may refer to the algebraic definition of the term, which is the sum of the products or multiplications of the corresponding entries of two sequences of numbers (e.g., two vectors where vector elements with the same indices are considered corresponding). In artificial intelligence (AI) applications, the arrays are a data array and a weight array, and array multiplication may include a plurality of dot product operations of data with weights, where each dot operation is in the form:

$$Out = \sum_i Data_i \times Weight_i$$

Under structured or semi-structured sparsity, an array, referred to herein as a as a sparse array, may be divided into equal size subsections or subgroups, each with a length of $N$ elements (e.g., weights), where $N$ is a natural number, e.g., 8, 12, 16, 32, 64, etc., where it may be guaranteed that at least $M$, a natural number smaller than $N$, elements out of any section of $N$ elements are zeros. A sparsity ratio or percentage may define the sparsity depth. For example, if at least $M$ elements out of any section of $N$ elements are zeros, the sparsity ratio is $(N-M)/N$. For example, for $N=16$, $M$ may equal 12, 8 or 4, for $N=12$, $M$ may equal $4$ or $6$ for $N=32$, $M$ may equal $16$, $12$ or $8$, etc. $M$ in this context may be a minimum number of elements with zero value within a subgroup. Other section lengths and minimal number of zero elements may be used. The terms subsections or subgroups may be used interchangeable herein to define a group of consecutive elements of an array, a matrix or a vector.

In AI, structured or semi-structured sparsity may be guaranteed by the training process of the AI model. For example, in NNs, sparsity can be encouraged through regularization techniques that may penalize the absolute size of the weights, leading to many weights becoming zero or by various pruning methods. Other methods may be used to provide structured sparsity in AI.

Current processors may accelerate the performance of array multiplication where one of the arrays is a sparse array by implementing a first-in-first-out buffer (FIFO) of weight elements that may enable reading the data array and the weight array, skip (e.g., not read) zero weight elements and correlated data elements. This solution may require implementing a sliding window, which may be used to read non-zero weights ahead of time at a variable rate. Thus, this solution may not be suited for a processor implementation, in which a structured pipeline does not enable reading at a variable rate efficiently, but for other types of neural processing units (NPUs) that are specialized hardware components designed to accelerate AI and machine learning (ML) calculations.

Another solution may include storing weight values in two arrays, a pointer array for pointing to the location of non-zero weights, and a non-zero array for storing non-zero weights consecutively. Multiplication may include reading the two arrays from memory and multiplying only the non-zero values. This solution is typically implemented for 50% sparsity, and provides some compression and a x2 acceleration. However, the compression rate is fixed, even if the actual rate of zero weight values is high, e.g., even if actual sparsity ratio is higher than 50%. In addition, a minimum zero weights ratio, or minimum number of zero weights, may be required (e.g., 50% for x2 acceleration and compression).

Embodiments of the invention may provide a processor, also referred to herein as a hardware accelerator, or simply as an accelerator, that enables both compressed storage of the sparse array and accelerated performance. Embodiments of the invention may enable compressed storage of the sparse array in memory, where only the non-zero elements out of the $N$ elements of the original array are stored, e.g., only the actual number of non-zero elements are stored, with a maximum of $N-M$ elements out of $N$ elements. Embodiments of the invention may also improve performance of array multiplications by including only the actual non-zero elements in the dot product, and not performing multiplications that are guaranteed to have a zero result. Since the actual number of non-zero elements may be higher than the guaranteed non-zero elements, both storage comparison and compilation acceleration may be superior over the prior art. For example, for a given number of multiply-accumulate (MAC) units, performance may be accelerated at least by a factor of $N/M$. For example, for $N=16$ and $M=8$, performance may be accelerated least by a factor of 16/8=2, or for $N=16$ and $M=4$, performance may be accelerated least by a factor of $16/4=4$.

Some embodiments of the invention may be demonstrated herein with relation to AI calculations, specifically, to multiplication of weights and data arrays, where a minimum level of sparsity is guaranteed for the weight array (e.g., that the number of zero elements in each subgroup is equal to or above the minimum level). However, it should be readily understood that embodiments of the invention may apply to any other applications of array multiplication, where structured sparsity is guaranteed in at least one of the arrays.

According to embodiments of the invention, elements of the sparse array may be stored in memory in compressed format including two arrays, a mask array and non-zero array. The mask array may include a plurality of bits, where each bit is associated with an array element in the uncompressed sparse array (e.g., the original sparse array with the zero and non-zero elements). For example, a bit in the mask array may correspond to an element in the sparse array having the same indices, e.g. where the mask bit and element have the same index or position. Bit values in the mask array may indicate whether the associated array element is zero or non-zero, e.g., a first bit value, referred to herein as 'set' may imply that the corresponding array element is non-zero, and the second bit value may imply that the corresponding array element is zero. For example, logical '1' bit is the mask may imply that the corresponding array element is non-zero, and logical '0' may imply that the corresponding array element is zero. The compressed sparse array may include only the non-zero elements from the uncompressed array.

The mask and compressed array may be stored in all memory levels of the AI processing system, including but not limited to internal memory, tightly-coupled memory (TCM) and/or level 1 cache. Thus, the memory footprint may be smaller than the memory footprint required for storing the uncompressed array according to the average zero probability by:

$$memory\ footprint\ reduction\ ratio = \frac{ZeroProb + (1 - ZeroProb) \times (1 + Width)}{Width}$$

Where the *Width* is the width of an array element in bits. For example, if the width of an array element is 8-bit, and zero value probability is 50%, compression ratio is 0.625, while if the width of an array element is 8-bit, and zero value probability is 80%, compression ratio is 0.325. It is noted that according to this compression scheme, the actual compression ratio is determined according to the actual number of zero elements in the sparse array, that may be higher than the guaranteed number of zero elements in the sparse array.

According to embodiments of the invention, the processor or accelerator may perform a single dot product operation (from a plurality of dot operations required for an array multiplication of a sparse array and a data array) by reading a subgroup of *N* mask bits from the mask array, reading a subgroup of 0 to *M* non-zero elements from the compressed sparse array (e.g., the sparse array with the non-zero elements only), according to the actual number of bits set in the mask, advancing or moving a pointer of the compressed sparse array (post modify) by the number of elements that were actually read from the compressed sparse array (which equals the number of set bits in the mask), reading a subgroup of *N* elements from the data array, and perform the dot product multiplication by multiplying each of the non-zero elements in the subgroup of non-zero elements with the corresponding data elements in the subgroup of data elements, where the corresponding data elements are selected from the subgroup of data elements using the mask, e.g., based on the locations of set bits in the mask. Thus, the number of multiplications that are performed equals the actual number of non-zero weight elements involved in the dot product, and the maximum number of multiplications per a dot product is N-*M*.

For example, if the subgroup mask value is '10100110', The first loaded non-zero element *NZW[0]* out of subgroup of non-zero elements *Weight[0:7]* is holding *Weight[1]* value, the second loaded non-zero element *NZW[1]* is holding *Weight[2]* value, the third loaded non-zero element *NZW[2]* is holding *Weight[5]* value and the fourth loaded non-zero element *NZW[3]* is holding *Weight[7]* value. Thus, the performed operation will be:

$$Out = NZW[0] * Data[1] + NZW[1] * Data[2] + NZW[2] * Data[5] + NZW[0] * Data[7]$$

Thus, that up to *M* multiplications are actually performed for calculating a dot product of *N* multiplications, and thus performance per implemented multiplier is accelerated by at least *N:M* ratio. For example, if *N=16* and *M=8*, this mechanism enables doubling the effective MAC performance of the processor. Thus, the processor or accelerator may require less MAC units for performing a dot product operation, or for performing an array multiplication, compared with the prior art. Moreover, the number of actual multiplications performed is not fixed (e.g., not fixed to a certain number of non-zero elements or a sparsity ratio) and is dictated by the actual number of non-zero weight elements in the dot product operations.

Embodiments of the invention may further allow setting the size of the equal-sized subgroups so that the maximal number of guaranteed elements with non-zero value may equal the number of multiply-accumulate circuits actually implemented in the processor.

By reducing the number of actual multiplications performed for performing an array multiplication with a sparse array, embodiments of the invention may improve the performance of the computer itself. The improvement to the computer itself may include allowing a more efficient utilization of physical MAC units, or, said differently, implementing less MAC units in a processor per length of a dot product. In addition, embodiments of the invention may improve the performance of the computer itself by saving power required for unnecessary multiplication by zero. Furthermore, the compact or compressed representation of the sparse array (e.g., the weight array), may reduce the amount of memory required for storing the sparse array to only the actual non-zero elements and a single bit per original array element in the mask,

Lastly, moving or advancing a pointer to the compressed sparse array (post modify) by the number of set bits in the mask, may be performed early in the pipeline stages of the processor, enabling efficient load operation of the non-zero array elements, despite loading variable (and not fixed) number of non-zero array elements in each load cycle.

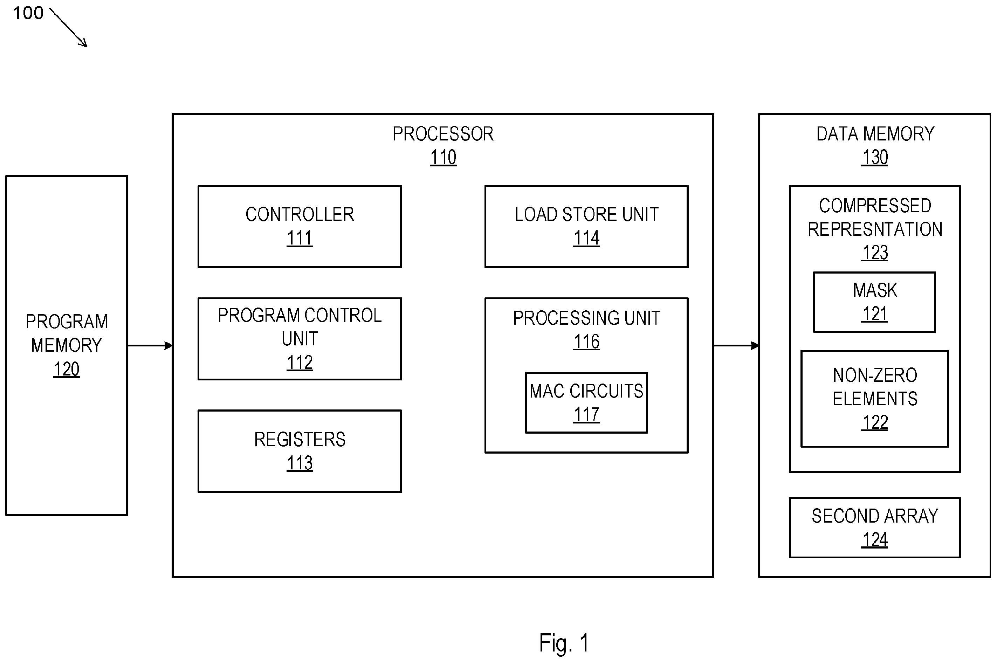

Reference is made to Fig. 1, which is a schematic illustration of an exemplary device 100 according to embodiments of the invention. A device 100 may include a computer device or any device capable of executing a series of instructions, for example for performing embodiments of the methods disclosed herein. Device 100 may be implemented for example as electrical circuits or hardware logic in an integrated circuit (IC), for example, by constructing device 100, processor 110 as well as other components of Fig. 1 as electrical circuits in an integrated chip or as a part of an chip, such as an ASIC, an FPGA, a CPU, a DSP, a microprocessor, a controller, a chip, a microchip, etc.

According to embodiments of the present invention, some units e.g., device 100, as well as the other components of Fig. 1, may be implemented in a hardware description language (HDL) design, written in Very High Speed Integrated Circuit (VHSIC) hardware description language (VHDL), Verilog HDL, or any other hardware description language. The HDL design may be synthesized using any synthesis engine such as SYNOPSYS® Design Compiler 2000.05 (DC00), BUILDGATES® synthesis tool available from, inter alia, Cadence Design Systems, Inc. An ASIC or other integrated circuit may be fabricated using the HDL design. The HDL design may be synthesized into a logic level representation, and then reduced to a physical device using compilation, layout and fabrication techniques, as known in the art.

Device 100 may include a processor or accelerator 110. Processor 110 may include or may be a vector processor, a reduced instruction set computer (RISC) processor, a central processing unit (CPU), a digital signal processor (DSP), a microprocessor, a controller, a chip, a microchip, a field-programmable gate array (FPGA), an application-specific integrated circuit (ASIC) or any other integrated circuit (IC), or any other suitable multi-purpose or specific accelerator or processor.

Device 100 may include program memory 120 and data memory 130. Each of program memory 120 and data memory 130 may be or may include any of a short-term memory unit and/or a long-term memory unit. Each of program memory 120 and data memory 130 may include, for example, random access memory (RAM), dynamic RAM (DRAM), flash memory, volatile memory, non-volatile memory, a TCM, a buffer, a cache, such as an L-1 cache and/or an L-2 cache, or other suitable memory units or storage units. Each of program memory 120 and data memory 130 may be implemented as separate (for example, "off-chip") or integrated (for example, "on-chip") memory unit, or as a combination of both. Other memory units may be used, or program memory 120 and data memory 130 may be implemented as a single memory unit. When discussed herein, loading from memory 130 to a register 113 typically means loading from TCM or Level 1 cache into a register 113 which is typically small (compared to memory), and integrated with or close to the processor 110, e.g., typically, processor instructions that calculate data can work on registers 113 and not directly on memory 130.

Processor 110 may request, retrieve, and process instructions from program memory 120 and data from data memory 130, and may control, in general, the pipeline flow of operations or instructions executed on the data. Processor 110 may receive instructions, for example, from program memory 120, to perform methods disclosed herein. Processor 110 may load data, for example, from data memory 130, to perform the instruction received from program memory 120. According to embodiments of the present invention, processor 110 may receive instructions to perform array multiplication or a dot product, according to embodiments of the invention.

Processor 110 may include controller 111, program control unit 112, registers 113, load store unit 114, and scalar processing unit 116. It should be readily understood that this block diagram of processor 110 is very high-level and demonstrative only. Processor 110 may include more and/or other functional blocks, as required. Controller 111 may control the general operations of processor 110, and activate other blocks within processor 110. Program control unit 112 may perform and control the execution of instructions. Program control unit 112 may fetch or read instructions, e.g., from program memory 120, decode the instructions, and send control signals to other components of processor 110, such as load store unit 114 and processing unit 116, to perform the required operations. Load store unit 114 may execute load and store instructions, including calculating virtual addresses of the load and store operations if required, loading data (e.g., array elements such as weights or data elements) from data memory 130 into registers 113, or storing data to data memory 130. Registers 113 may include high-speed memory locations within processor 110 that may be used to temporarily store data (e.g., weights, data elements and calculation results). Processing unit 116 may perform arithmetic operations and/or logical operations on the loaded data according to the loaded instructions. Processing unit 116 may include a plurality of MAC circuits 117, each configured to multiply or compute the product of two numbers and add the result to an accumulator.

According to some embodiments, a sparse array may be compressed offline in a preprocessing or preparation stage. The compression may be performed once for each sparse array, and only the compressed representation 123 of the uncompressed sparse array may be stored in data memory 130, thus reducing the storage area required for device 100, e.g., both in data memory 130 and in registers 113. In the preprocessing stage, processor 110 (or another device) may receive or load the uncompressed sparse array, generate a mask 121 indicating the locations of non-zero elements in the uncompressed sparse array, discard zero elements in the sparse array, and store in data memory 130 the compressed representation 123 of the parse array, e.g., mask 121 and the non-zero elements 122 of the sparse array. Mask 121 may be generated by traversing the elements of the sparse array and marking the locations of the non-zero elements. For example, mask 121 may include a single bit for each element in the sparse array, where a first value of the bit, e.g., 'set' or a logical '1', may indicate a non-zero value in the corresponding array element, and a second value of the bit, e.g., 'clear' or a logical '0', may indicate a zero value in the corresponding element. Other markings may be used. Thus, storage area required for storing the sparse array may be reduced to the storage area required for storing only the non-zero elements 122 of the sparse array and mask 121, where mask 121 includes a single bit per element of the uncompressed sparse array.

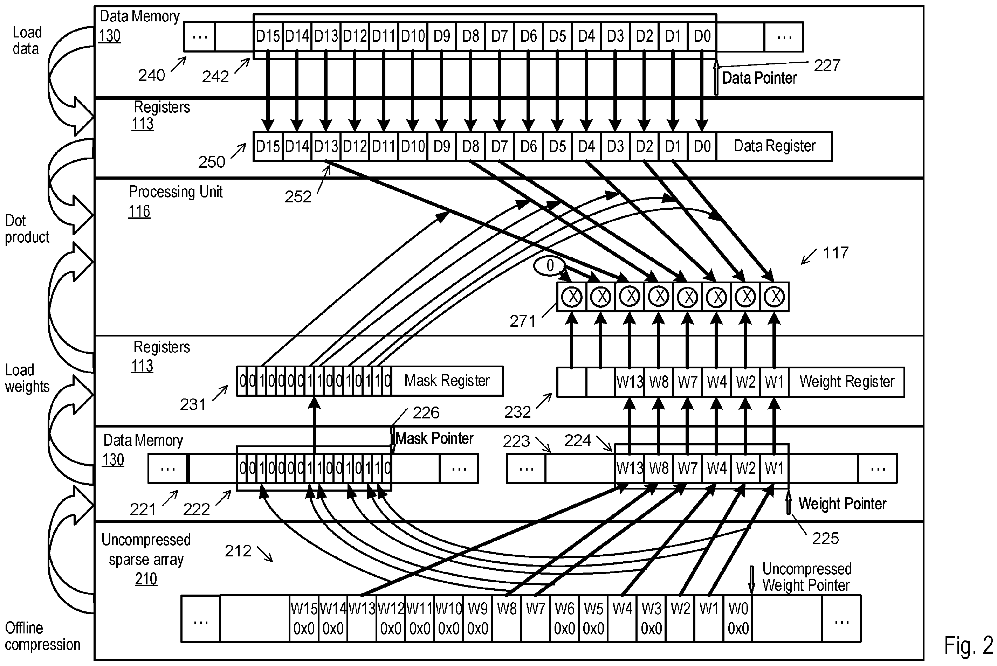

Processor 110 may be configured to multiply a first array (such as sparse array 210 shown in Fig. 2) by a second array 124, where at least one of the arrays, e.g., the first array, may be a sparse array. The sparse array may include a plurality of equal-sized subgroups of elements of the sparse array, where each of the subgroups may include at least a minimum number of elements with zero value. Second array 124 may be stored in data memory 130, and the sparse array may be stored in data memory 130 in a compressed format 123, e.g., including mask 121 and the non-zero elements 122 of the uncompressed sparse array, following the preprocessing stage.

For example, program control unit 112 may obtain a command to multiply a sparse array by a second array 124, including the required parameters. In response, program control unit 112 may instruct load store unit 114 to:

- load subgroup mask 121 (subgroup mask may refer to the part of mask 121 corresponding to the subgroup of elements of the sparse array) from data memory 130 into a first register of registers 113, where subgroup mask 121 may indicate the locations of non-zero elements within the subgroup of elements of the sparse array,

- load non-zero elements in a subgroup of elements of the sparse array, from non-zero elements of a sparse array 122 stored in data memory 130 into a second register of registers 113, where the number of the non-zero elements in the subgroup resides in the subgroup mask 121, and

- load a subgroup of elements of the second array (data elements corresponding to, e.g., having the same indices as, the subgroup of elements of the sparse array) from second array 124 stored in data memory 130 into a third register of registers 113.

Loading non-zero elements in a subgroup of elements of the sparse array from data memory 130 may include advancing a pointer to the location of the next non-zero elements of the next subgroup of non-zero elements within non-zero elements 122 of the sparse array (post modify). Load store unit 114 may advance the pointer by the number of elements that are actually read from non-zero elements 122 of the sparse array, which equals the number of set bits in subgroup mask 121. Advancing the pointer by the number of set bits in subgroup mask 121, may be performed early in the pipeline stages of processor 110, enabling efficient load operation of the non-zero elements, despite loading variable (not fixed) number of non-zero elements in each load cycle.

It is noted that following the compression stage, only compressed versions of the sparse array, e.g., compressed representation 123 of the uncompressed sparse array, may be stored in all levels of data memory 130, including all levels of cache and registers 113. Compressed representation 123 of the uncompressed sparse array is not decompressed in all stages of the array multiplication. Instead, only the non-zero elements in a subgroup of elements of the sparse array are loaded, from non-zero elements of a sparse array 122 stored in data memory 130 into a register of registers 113 and used for performing the dot product operation, with no decompression. Thus, memory size for storing the sparse array is reduced at all memory levels after the initial offline step of compression.

Program control unit 112 may select elements of the subgroup of elements of the second array that correspond to the non-zero elements of the subgroup of elements of the sparse array according to subgroup mask 121, and instruct processing unit 116 to perform a dot operation, e.g., multiply each of the non-zero elements of the subgroup of elements of the sparse array by the corresponding elements of the subgroup of elements of the second array and accumulate the results. According to embodiments of the invention, processing unit 116 may use (or may allocate) for the dot multiplication operation, a number of MAC circuits 117 that equals a maximal number of elements of non-zero elements of the subgroup of elements of the sparse array. In cases where the actual number of non-zero elements of the subgroup of elements of the sparse array is smaller than the maximal number of non-zero elements of the subgroup of elements of the sparse array, not all MAC circuits 117 allocated for the dot multiplication operation may be used, e.g., unused MAC circuits 117 may be disabled. It is noted for generality that a single instruction may perform a plurality of dot operations, and processor 110 may be configured to (e.g., include the proper hardware for) executing a plurality of instruction executed in parallel.

Processor 110 may repeat the dot operations for consecutive subsections or subgroups of the sparse array and second array, until the array multiplication is completed.

In some embodiments, data elements and weight elements are 4, 8, 16, 32 or 64-bit wide, a size of a subgroup may be 8, 12, 16, 32 or 64 elements, zero value probability in the sparse array may be 33%, 50% or higher. Other data sizes and zero value probabilities may be used.

Embodiments of the invention may support a relaxed semi-structured sparsity, by setting the size of the equal-sized subgroups so that the maximal number of non-zero elements equals the number of multiply-accumulate circuits. For example, processor 110 may support certain $N$ and $M$ values, e.g., include a certain number of MAC circuits 117, and support subsections or subgroups with length of $N$. However, the actual non-zero sparsity may be higher (e.g. more non-zero elements) than the maximum $M/N$ ratio. This may occur for networks that are trained with a shorter section $N1 < N$ and a number of non-zero elements that is not larger than $M$ (the sparsity ratio is $M/N1$ which is larger than $M/N$). In this scenario, the length of the subsections may be reduced to *N1,* where *N1< N,* the subsection mask length may be set to a length of *N1* as well, e.g., *N1* bits of the mask may be loaded from data memory 130, and zero-extended to the size of *N.* The rest of the algorithm may be performed as disclosed herein. The effective acceleration in this case may equal *N1/M.* Thus, embodiments of the invention may support other values of *M* and *N,* as long as N-M (or *N1-M1*), which is the maximal number of non-zero elements in a subgroup of the sparse array is equal or smaller than the number of MAC circuits 117 available for the array multiplication operation.

For example, in the case of processor 110 with *N* = 16 and *M* = 8, and the maximum of non-zero weight higher than 50% (8 out of every 16), but not higher than 66% (8 out of 12), the mask should be read from data memory 130 in 12-bit subsections, and each loaded 12-bit subsection mask may zero-extended to 16-bit, enabling the 16-bit acceleration machine to work and achieve effective acceleration of *12/8=1.5.*

Reference is now made to Fig. 2 which demonstrates the performance of a single dot operation, according to embodiments of the present invention. An embodiment of the performance of a single dot operation, according to embodiments of the present invention may be performed, for example, by device 100 shown in Fig. 1, or by any other hardware, software, or combination thereof. As noted, processor 110 may perform a plurality of dot product operations in parallel.

The example presented in Fig. 2 presents a single dot product operation between two corresponding subgroups of elements, where the first subgroup of elements 212 pertains to a sparse array 210, in this case a sparse weight array, and the second subgroup of elements 242 pertains to a data array 240. It should be readily understood that both sparse array 210 and data array 240 may hold other types of data, as long as the first array is a sparse array as defined herein. In this example, first subgroup 212 includes 16 weight elements marked WO-W15, and second subgroup 242 includes 16 corresponding data elements marked D0-D15. In this example 50% sparsity is guaranteed in sparse array 210.

An uncompressed subgroup 212 of sparse array 210 is presented in the lowest panel of Fig. 2. As can be seen, elements W15, W14, W12-W9, W6, W5, W3 and WO, a total of 10 array elements, all qual zero. Thus, the actual number of zero-elements in uncompressed subgroup 212 is higher than the guaranteed sparsity. Sparse array 210 may be compressed in an offline compression process, and stored in data memory 130 as a pair of a mask array 221 and compressed weight array 223. Compression may include discarding or removing all zero elements of sparse array 210, for example for uncompressed subgroup 212 that would mean removing all ten zero elements W15, W14, W12-W9, W6, W5, W3 and WO, and storing only the non-zero elements W13, W8, W7, W4, W2 and W1 as non-zero subgroup 224. Mask 221 may include a bit for each element of uncompressed sparse array 210. For example, subgroup mask 222 may include 16 bits, one bit for each element of uncompressed subgroup 212, where a 'set' value in subgroup mask 222 may indicate a non-zero element in the corresponding location in uncompressed subgroup 212 and a 'clear' value in subgroup mask 222 may indicate a zero element in the corresponding location in uncompressed subgroup 212. A location in subgroup mask 222 may be the bit index, and in uncompressed subgroup 212 the element index. Data array 240 may be stored in an uncompressed format in data memory 130.

In a loading stage, subgroup mask 222 may be loaded into mask register 231, non-zero weight subgroup 224 may be loaded into weight register 232, and data subgroup 242 be loaded into data register 250, where mask register 231, weight register 232 and data register 250 are registers 113 of processor 110.

Loading may include advancing pointers 225, 226 and 227 to the locations in data memory 130, where the next subgroup mask 222, the next non-zero weight subgroup 224 and the next data subgroup 242 are located within data memory, respectively. Advancing pointers 225, 226 and 227 may also be referred to as performing post modification. Advancing mask pointer 226 and data pointer 227 is a trivial task, since the sizes of data subgroup 242 and subgroup mask 222 are known and constant. Advancing weight pointer 225, however, is not as trivial since the number of non-zero elements in non-zero weight subgroup 224 may not be constant and change according to the actual number of non-zero elements in uncompressed subgroup 212. While structured or semi-structured sparsity may guarantee a minimum number of zero-elements in each uncompressed subgroup 212, the actual number of zero-elements in at least one of uncompressed subgroup 212 may be higher than the guaranteed minimum number, as in the example presented in Fig. 2. Thus, advancing weight pointer 225 requires knowing how many non-zero elements are included in non-zero weight subgroup 224.

It is not a trivial task to implement a load instruction in which the address increment depends on the data that is loaded when the instruction is performed, due to pipeline latency. Embodiments of the invention resolve this difficulty by splitting the compressed sparse array into two separated arrays, a mask array and a non-zero elements array (such as mask 121 and non-zero elements 122, that together form compressed sparse array 123). Thus, processor 110 may load subgroup mask 222 first, with a simple pointer post modification, and non-zero subgroup 224 may be loaded few cycles later, after subgroup mask 222 already resides in mask register 231, the number of set bits in subgroup mask 222 is known, and the post modification of weight pointer 225 can be performed.

According to embodiments of the invention, weight pointer 225 may be advanced based on the number of set bits in the subgroup mask 222. The formula for advancing the pointer may further depend on the addressing method and the width of the weight elements. Thus, advancing weight pointer 225 may be performed early in the pipeline stages of processor 110, just by counting how many bits are set to logical '1' in subgroup mask 222. For example, considering a typical pipeline stages of a RISC processor, with the pipeline stages of instruction fetch (IF), instruction decode (ID), execute (EX), memory access (MEM) and write back (WB), weight pointer 225 may be advanced at the instruction decode stage (ID, when the number of set bits in subgroup mask 222 is already known), and not in more advanced stages of the pipeline such as EX, MEM or WB, after the command is executed, despite the variable load length.

It is noted for generality that if a plurality of dot operations are performed in parallel, the pointers are advanced accordingly. For example, while loading of a single set a subgroup mask 222, a non-zero weight subgroup 224, and a data subgroup 242 is described, wider or multiple loads of multiple sets, each set including a subgroup mask 222, a non-zero weight subgroup 224, and a data subgroup 242, may be loaded in parallel in a single loading cycle, where each set with variable length according to its correlated subgroup mask 222, and advance the pointer after the last subgroup mask 222 was loaded in the decode stage (ID).

Once data is loaded and stored in mask register 231, weight register 232 and data register 250, the dot product operation may be performed by selecting data elements from the subgroup of data elements 252 that correspond to the non-zero elements that are included in non-zero weight subgroup 224. Selection of data elements from the subgroup of data elements 252 may be performed according to the locations of non-zero weight elements in uncompressed weight array 212, as represented in subgroup mask 222, e.g., according to the location of 'set' bits in subgroup mask 222. For example, in Fig. 2, the non-zero elements of uncompressed weight array 212 are W13, W8, W7, W4, W2 and W1, which form non-zero weight subgroup 224, subgroup mask 222 equals '0010000110010110' and the selected data elements from subgroup of data elements 252 are D13, D8, D7, D4, D2 and D1, e.g., data elements with the same indices as the weight element in the corresponding subgroup. MAC circuits 117 may include eight MAC units, that may support the guaranteed sparsity percent of 50%. In the present example two MAC circuits 271 may be disabled, as only six out of the eight MAC circuits 117 are required for performing:

$$Result = W13 \cdot D13 + W8 \cdot D8 + W7 \cdot D7 + W4 \cdot D4 + W2 \cdot D2 + W1 \cdot D1,$$

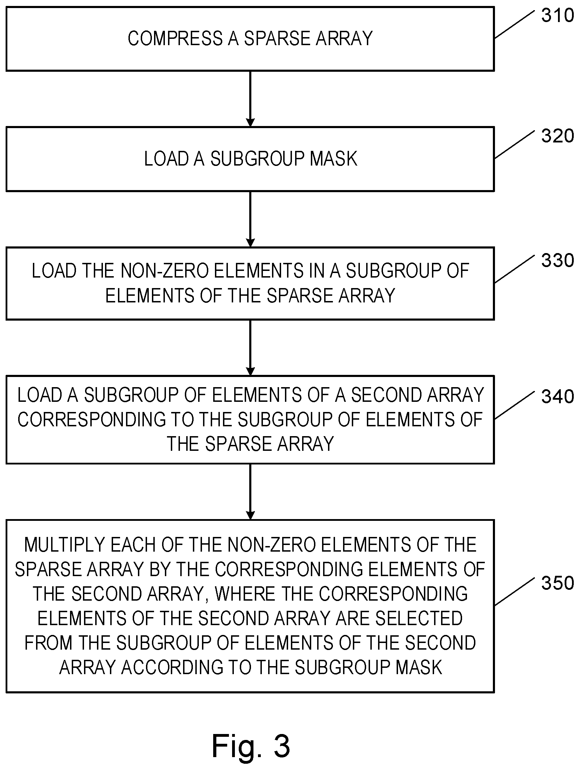

Reference is made to Fig. 3, which is a high-level flowchart illustrating a method for multiplying a sparse array by a second array, according to embodiments of the invention. An embodiment of the method for multiplying a sparse array by a second array may be performed, for example, by device 100 shown in Fig. 1, or by any other hardware, software, or combination thereof. In some embodiments, the sparse array may be a sparse weight array of an AI model, the second array may be a data array and the multiplication may be performed for inferring the AI model. Other arrays may be multiplied.

In operation 310, a processor, e.g., processor 110, presented in Fig. 1 or another processor, may compress the sparse array. The processor may compress the sparse array once for each sparse array, and only the compressed representation of the sparse array may be stored in data memory and used for the array multiplication. The processor may compress the sparse array by generating a mask indicating locations of non-zero elements in the uncompressed sparse array, discarding zero elements in the sparse array, and storing the mask and the non-zero elements of the sparse array in the data memory. For example, the mask may include a single bit for each element in the sparse array, where a first bit value may indicate a zero element in the location corresponding to the bit in the sparse array, and a second bit value may indicate a non-zero element in the location corresponding to the bit in the sparse array. Other mask formats may be used. It is noted that operation 310 may be performed by the same processor as operations 320-350, or by a different processor.

In operation 320, the processor may load (e.g., from data memory into a register) a subgroup mask, e.g., a part of the mask generated in operation 310 that corresponds to a subgroup of elements in the sparse array. In operation 330, the processor may load (e.g., from data memory into a second register) the non-zero elements in a subgroup of elements of the sparse array corresponding to the subgroup mask. The processor may advance a pointer to the location of the non-zero elements of the next subgroup of non-zero elements within non-zero elements of the sparse array (post modify). The processor may advance the pointer by the number of elements that are actually read from the non-zero elements of the sparse array, which, if a set bit in the mask indicates a non-zero element, equals the number of set bits in subgroup mask.

In operation 340, the processor may load (e.g., from data memory into a third register) a subgroup of elements of the second array corresponding to the subgroup of elements of the sparse array. In operation 350, the processor may perform a dot operation, e.g., multiply each of the non-zero elements of the sparse array by the corresponding elements of the second array and accumulate the results (e.g., using MAC units), where the corresponding elements of the second array are selected from the subgroup of elements of the second array according to the subgroup mask. Operations 320-350 may be repeated for consecutive subgroups of the sparse and second arrays, until the array multiplication is completed. These operations may form part of inference of a NN: thus further operations performed may include for example determining the output of a row of a NN; NN inference; or producing NN output.

Embodiments of the present invention may include a computer program application stored in non-volatile memory, non-transitory storage medium, or computer-readable storage medium (e.g., hard drive, flash memory, CD ROM, magnetic media, etc.), storing instructions that when executed by a processor (e.g., processor 1410) carry out embodiments of the invention. Processor 110 may be configured to carry out embodiments described herein by for example executing software or instructions.

Embodiments described in this disclosure may include the use of a special purpose or general-purpose computer including various computer hardware or software modules, as discussed in greater detail below.

Embodiments within the scope of this disclosure also include computer-readable media, or non-transitory computer storage medium, for carrying or having computer-executable instructions or data structures stored thereon. The instructions when executed may cause the processor to carry out embodiments of the invention. Such computer-readable media, or computer storage medium, can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above should also be included within the scope of computer-readable media.

Computer-executable instructions comprise, for example, instructions and data which cause a general-purpose computer, special purpose computer, or special purpose processing device to perform a certain function or group of functions. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

As used herein, the term "module" or "component" can refer to software objects or routines that execute on the computing system. The different components, modules, engines, and services described herein may be implemented as objects or processes that execute on the computing system (e.g., as separate threads). While the system and methods described herein are preferably implemented in software, implementations in hardware or a combination of software and hardware are also possible and contemplated. In this description, a "computer" may be any computing system as previously defined herein, or any module or combination of modulates running on a computing system.

For the processes and/or methods disclosed, the functions performed in the processes and methods may be implemented in differing order as may be indicated by context. Furthermore, the outlined steps and operations are only provided as examples, and some of the steps and operations may be optional, combined into fewer steps and operations, or expanded into additional steps and operations.

The present disclosure is not to be limited in terms of the particular embodiments described in this application, which are intended as illustrations of various aspects. Many modifications and variations can be made without departing from its scope. Functionally equivalent methods and apparatuses within the scope of the disclosure, in addition to those enumerated, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is also to be understood that the terminology used in this disclosure is for the purpose of describing particular embodiments only, and is not intended to be limiting.

This disclosure may sometimes illustrate different components contained within, or connected with, different other components. Such depicted architectures are merely exemplary, and many other architectures can be implemented which achieve the same or similar functionality.

**Claims**

1. A method for multiplying a first array by a second array, wherein the first array comprises a plurality of equal-sized subgroups of elements of the first array, each subgroup comprising at least a minimum number of elements with zero value, the method comprising, for each subgroup of elements of the first array:

   loading a subgroup mask from memory into a first processor register, the subgroup mask indicating locations of non-zero elements within the subgroup of elements of the first array;
   loading, from memory into a second processor register, the non-zero elements in the subgroup of elements of the first array;
   loading, from memory into a third processor register, a subgroup of elements of the second array corresponding to the subgroup of elements of the first array; and
   multiplying each of the non-zero elements of the first array by the corresponding elements of the second array, wherein the corresponding elements of the second array are selected from the subgroup of elements of the second array according to the subgroup mask.

2. The method of claim 1, wherein the subgroup mask comprises a single bit for each non-zero element in the subgroup of elements of the first array.

3. The method of any of the preceding claims, comprising:

   receiving the first array;
   generating a mask, by traversing the elements of the first array and marking the locations of the non-zero elements in the mask;
   discarding zero elements from the first array; and
   storing in memory the mask and the non-zero elements.

4. The method of any of the preceding claims, comprising:
   storing in memory a mask comprising locations of non-zero elements within the first array, and the non-zero elements of the first array without the zero elements.

5. The method of claim 4, wherein loading the non-zero elements in the subgroup of elements comprises advancing a pointer based on the number of the non-zero elements that are loaded.

6. The method of claim 4, wherein the subgroup mask comprises a single bit for each element in the subgroup of elements of the first array, wherein set bits in the subgroup mask indicate locations of the non-zero elements, and wherein loading the non-zero elements in the subgroup of elements of the first array comprises advancing a pointer based the number of set bits in the subgroup mask.

7. The method of any of the preceding claims, wherein the first array comprises weights of a neural network, wherein the second array comprises data elements, and wherein multiplying the first array by the second array produces a result of inferring the neural network on the data array, wherein the neural network is trained to have a minimum level of sparsity.

8. The method of any of the preceding claims, wherein multiplying a non-zero element of the first array by the corresponding element of the second array is performed by a multiply-accumulate circuit.

9. The method of claim 9, comprising setting the size of the equal-sized subgroups so that the maximal number of non-zero elements in the first array equals the number of multiply-accumulate circuits.

10. A processor for multiplying a first array by a second array, wherein the first array comprises a plurality of equal-sized subgroups of elements of the first array, each comprising at least a minimum number of elements with zero value, the processor comprising:

    a circuit for loading from memory non-zero elements in a subgroup of elements of the first array;
    a circuit for loading from memory a subgroup of elements of the second array corresponding to the subgroup of elements of the first array;
    a circuit for selecting elements of the second array that correspond to the non-zero elements of the first array, wherein the circuit to select the corresponding elements of the second array from the subgroup of elements of the second array according to a subgroup mask indicating locations of non-zero elements within the subgroup of elements of the first array; and
    a plurality of multiply-accumulate circuits configured to multiply each of the non-zero elements of the first array by the corresponding elements of the second array, wherein the number of multiply-accumulate circuits equals a maximal number of elements of the first array with non-zero value.

11. The processor of claim 10, wherein the subgroup mask comprises a single bit for each non-zero element in the subgroup of elements of the first array.

12. The processor of any of claims 10-11, wherein the processor is configured to:
    store in memory a mask comprising locations of non-zero elements within the first array, and the non-zero elements of the first array without the zero elements.

13. The processor of claim 12, wherein the processor is configured to load the non-zero elements in the subgroup of elements by advancing a pointer by the number of the non-zero elements that are loaded.

14. The processor of claim 12, wherein the subgroup mask comprises a single bit for each element in the subgroup of elements of the first array, wherein set bits in the subgroup mask indicate locations of the non-zero elements, and wherein the processor is configured to load the non-zero elements in the subgroup of elements of the first array comprises advancing a pointer based the number of set bits in the subgroup mask.

15. The processor of any of claims 10-14, wherein the processor is configured to set the size of the equal-sized subgroups so that the maximal number of non-zero elements in the first array equals the number of multiply-accumulate circuits.

100

PROGRAM MEMORY 120

PROCESSOR 110

CONTROLLER 111

PROGRAM CONTROL UNIT 112

REGISTERS 113

LOAD STORE UNIT 114

PROCESSING UNIT 116

MAC CIRCUITS 117

DATA MEMORY 130

COMPRESSED REPRESNTATION 123

MASK 121

NON-ZERO ELEMENTS 122

SECOND ARRAY 124

Fig. 1

Fig. 2

```
┌─────────────────────────────────────────────────────┐
│                                                       │  ─╱─ 310
│            COMPRESS A SPARSE ARRAY                     │
│                                                       │
└─────────────────────────────────────────────────────┘
                          │
                          ▼
┌─────────────────────────────────────────────────────┐
│                                                       │  ─╱─ 320
│              LOAD A SUBGROUP MASK                     │
│                                                       │
└─────────────────────────────────────────────────────┘
                          │
                          ▼
┌─────────────────────────────────────────────────────┐
│       LOAD THE NON-ZERO ELEMENTS IN A SUBGROUP OF     │  ─╱─ 330
│          ELEMENTS OF THE SPARSE ARRAY                 │
│                                                       │
└─────────────────────────────────────────────────────┘
                          │
                          ▼
┌─────────────────────────────────────────────────────┐
│   LOAD A SUBGROUP OF ELEMENTS OF A SECOND ARRAY       │  ─╱─ 340
│   CORRESPONDING TO THE SUBGROUP OF ELEMENTS OF        │
│              THE SPARSE ARRAY                          │
└─────────────────────────────────────────────────────┘
                          │
                          ▼
┌─────────────────────────────────────────────────────┐
│   MULTIPLY EACH OF THE NON-ZERO ELEMENTS OF THE       │
│   SPARSE ARRAY BY THE CORRESPONDING ELEMENTS OF       │
│   THE SECOND ARRAY, WHERE THE CORRESPONDING           │  ─╱─ 350
│   ELEMENTS OF THE SECOND ARRAY ARE SELECTED           │
│   FROM THE SUBGROUP OF ELEMENTS OF THE SECOND         │
│   ARRAY ACCORDING TO THE SUBGROUP MASK                │
└─────────────────────────────────────────────────────┘
```

# Fig. 3

Europäisches
Patentamt
European
Patent Office
Office européen
des brevets

# EUROPEAN SEARCH REPORT

**Application Number**

EP 25 18 3823

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/097130 A1 (LIU ZHI-GANG [US] ET AL) 1 April 2021 (2021-04-01) <br> * figures 1A, 2, 3, 4, 5A, 5B, 7, 8, 9 * <br> * paragraph [0002] * <br> * paragraph [0036] - paragraph [0052] * <br> * paragraph [0064] - paragraph [0095] * <br> ----- | 1-15 | INV. <br> G06F7/544 <br> G06F17/16 |
| X | ADAVALLY SHASHANK SHASHANKADAVALLY@MY UNT EDU ET AL: "ExPress: Simultaneously Achieving Storage, Execution and Energy Efficiencies in Moderately Sparse Matrix Computations", <br> 2020 2ND SYMPOSIUM ON SIGNAL PROCESSING SYSTEMS, ACMPUB27, NEW YORK, NY, USA, <br> 28 September 2020 (2020-09-28), pages 46-60, XP058583691, <br> DOI: 10.1145/3422575.3422777 <br> ISBN: 978-1-4503-8858-0 <br> * figure 1 * <br> * Algorithm 1 * <br> * table 1 * <br> * Section 3 * <br> ----- | 1,10 | |

**TECHNICAL FIELDS SEARCHED (IPC)**

G06F
G06N

The present search report has been drawn up for all claims

| Place of search | Date of completion of the search | Examiner |
|---|---|---|
| Munich | 6 November 2025 | Winkelbauer, Andreas |

EPO FORM 1503 03.82 (P04C01)

## ANNEX TO THE EUROPEAN SEARCH REPORT
## ON EUROPEAN PATENT APPLICATION NO.

**EP 25 18 3823**

This annex lists the patent family members relating to the patent documents cited in the above-mentioned European search report.
The members are as contained in the European Patent Office EDP file on
The European Patent Office is in no way liable for these particulars which are merely given for the purpose of information.

**06-11-2025**

| Patent document cited in search report | Publication date | Patent family member(s) | Publication date |
|---|---|---|---|
| US 2021097130 A1 | 01-04-2021 | NONE | |

EPO FORM P0459

For more details about this annex : see Official Journal of the European Patent Office, No. 12/82